# EUROPEAN PATENT APPLICATION

(11) **EP 4 653 910 A1**
(43) Date of publication of application: **26.11.2025**
(21) Application number: 25177022.8
(22) Date of filing: 16.05.2025
(51) Int. Cl.: G01S 7/35, G01S 7/41, G01S 13/34, G01S 13/42, G01S 13/58, G01S 13/931

(54) **RADAR SIGNAL PROCESSING WITH PROGRESSIVE PEAK DETECTION**

(30) Priority: 20.05.2024 US 202418669395
(71) Applicant: NXP B.V., 5656 AG Eindhoven (NL)
(72) Inventor: AMBEL, Juan Lara, 5656AG Eindhoven (NL); BRETT, Maik, 5656AG Eindhoven (NL)
(74) Representative: Hardingham, Christopher Mark

(57) **Abstract**

An automotive radar system includes at least one transmitter and at least one receiver and a processor configured to receive, from the at least one receiver, received radar signals, generate a first subsection of a radar cube using the received radar signals, detect a first set of candidate peaks in the first subsection of the radar cube, generate a second subsection of the radar cube using the received radar signals, detect a second set of candidate peaks in the second subsection of the radar cube, determine a set of locations in a candidate peak dataset, wherein each location in the set of locations is associated with candidate peaks in both the first set of candidate peaks and the second set of candidate peaks, and estimate a direction of arrival of an object using the candidate peaks associated with the set of locations.

## Description

### TECHNICAL FIELD

The present disclosure is directed in general to radar systems and associated methods of operation. In one aspect, the present disclosure relates to an automotive radar system configured to iteratively process received radar signals with a progressive peak detection scheme to reduce the memory requirements of the radar system's signal processing subsystem.

### BACKGROUND

A radar system transmits an electromagnetic signal and receives back reflections of the transmitted signal. The time delay between the transmitted and received signals can be determined and used to calculate the distance and/or the speed of objects causing the reflections. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms.

During operations, frequency modulated continuous wave (FMCW) radar systems typically store reflected, received and sampled radar reflections in so-called radar cubes. These radar cubes are three-dimensional data structures that contain received signal data for particular transmitted signal sample number, chirp number, and transmitter antenna combinations. During normal operations, these data cubes can be quite large, taking up to dozens of megabytes (MB) of data.

In automotive radar system applications, such as corner radar systems, the form factor of the radar device precludes the use of unexpensive external memory, such as dynamic random access memory (DRAM), and the system instead must rely upon internal and relatively expensive static random access memory (SRAM) memory. Given the cost of such systems, it may be beneficial to reduce the memory footprint of radar processing operations in civil automotive radar systems.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1A depicts a simplified schematic block diagram of an automotive radar system which includes a radar device connected to a radar controller processor.
FIG. 1B graphically depicts the processing steps that may be implemented by a processor to process digital signals received from the automotive radar system of FIG. 1A.
FIG. 2 is a graph depicting a representation of a slice of radar cube data after range-FFT and Doppler FFT processing.
FIG. 3 is a flowchart depicting a method for processing subsections of a radar cube data iteratively in accordance with the present disclosure.
FIG. 4 is a diagram providing a visual illustration of an approach for generating a candidate peak dataset.
FIG. 5 is a three-dimensional plot depicting peaks detected by a conventional signal processing approach for a simulation.
FIG. 6 is a three-dimensional plot depicting peaks detected by a signal processing approach for a simulation in accordance with the present disclosure.

### DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

In the context of the present disclosure, it will be appreciated that radar systems may be used as sensors in automotive radar sensors for road safety and vehicle control systems, such as advanced driver-assistance systems (ADAS) and autonomous driving (AD) systems.

As an example, the automotive radar system may be implemented as frequency modulated continuous wave (FMCW) radar system. FMCW radar systems transmit frequency modulated signals (chirps) and receive their echoes as reflections from nearby objects. After down-mixing the received signals to a base band, the resulting signal is composed of a number of sinusoidal waves, each one with a beat-frequency proportional to the range of a particular object. Within each sinusoid, an additional phase term carries Doppler-phase information for each object in the vicinity of the radar system. This Doppler-phase generally changes slowly and encodes information about the relative speed of the respective object.

FMCW radar signal processing attempts to identify both a range and Doppler component of received reflection signals for each nearby object that generates reflection signals (e.g., other automobiles, road signs). This processing involves arranging the sampled data value for received chirp signals in the form of several horizontal vectors arranged to form a range-Doppler matrix. The row length of the matrix is equivalent to the number of samples per chirp signals (usually a power of two, e.g., 1024 values), and the column length of the range-Doppler matrix is the number of chirps measured (usually also a power of two, e.g., 256 values). These two-dimensional matrices are generated for each receive antenna in the radar system. The several two-dimensional matrices for each receive antenna are arranged together in a three-dimensional matrix having dimensions sample number x chirp number x receive antenna and is referred to as a 'radar cube'.

In conventional signal processing approaches, received signal data is buffered until a complete radar cube has been received. Once received, the complete radar cube is arranged in memory as a matrix with dimensions equivalent to the number of Doppler bins (N_Dbins) x number of range bins (N_Rbins) x receive antenna number (receive_antenna). Once the complete radar cube is available, further processing steps are executed to process the radar cube to identify potential objects and attributes (e.g., direction-of-arrival and speed) of those objects. Such processing involves, initially, a Fast Fourier Transform (FFT) executed over the range dimension of the radar cube (referred to as the 'fast-time' FFT or 'R-FFT'), and an FFT executed over the Doppler dimension of the radar cube (referred to as the 'slow-time' FFT or 'D-FFT'). Peak detection methods are executed over the entire three-dimensional dataset containing the data processed through the fast-time and slow-time FFTs. In modern automobile radar systems, this is a large dataset as compared to the typical memory resources of such radar systems.

As such, a difficulty can arise in automotive radar applications, such as corner radar system, where the radar system relies upon internal and expensive SRAM memory rather than less expensive DRAM due to constraints in the form factor of the device. Given those memory restrictions, it can be expensive to provide adequate memory resources to load an entire radar cube into memory to perform the operations described above. In those circumstances, a reduction of the memory footprint of the radar signal processing subsystem can be beneficial in reducing the system's cost and/or form factor.

The present disclosure provides an approach to radar signal processing that may be implemented using a reduced memory footprint. In particular, in the present radar signal processing approach, the radar signal processing (R-FFT, D-FFT and peak detection) is decomposed into a number (N) of partial processing steps and the peaks actually existing in the radar cube spectrum are progressively detected. Each processing step processes a subsequent and different portion of incoming data that make up a subsection of the full radar cube dataset.

When a new portion (1/N) of the total number of chirps is available, a new processing step (encompassing R-FFT, D-FFT and peak detection) is executed (even before the entire radar cube has been received) over that subsection of data. At that time, previously received and processed portions of the same radar cube data can be discarded, thereby reducing memory storage requirements.

Each processing step of each subsection of the entire radar cube results in the identification of different sets of candidate peaks within each subsection, based on the partial data available at each processing step. Consequently, when all N processing steps have been executed, indicating that all subsections of a single radar cube dataset have been processed, the information regarding the candidate peak detections in each subsection is combined. During that process, the identified candidate peaks are projected onto the same axis in the range-Doppler dimensions using their coordinates, and peak information related to sets of coordinate pairs is collected.

With the candidate peaks identified in each subsection combined into a single data set for the entire radar cube, further analysis is performed, using a final pass-criteria as described herein, to determine whether each candidate peak associated with a particular coordinate within the radar cube is associated with a true spectrum peak. In one embodiment, the number of times that candidate peaks at particular coordinates are detected in each subsection of the radar cube are tallied in a counter. If the counter indicates that the same candidate peak was detected at the same coordinate in over a threshold number of subsections of the radar cube, that may indicate that the candidate peak is a true spectrum peak within the entire radar cube. With true spectrum peaks identified, the peak locations can be identified as an output of the present processing system. The peaks can then be further analyzed to perform direction-of-arrival analysis for objects in the vicinity of the automobile.

As described herein, because the present disclosure contemplates iteratively processing subsections of a full radar cube, the D-FFT operations performed on the various subsections may be extended with zero padding to allow D-FFT processing to occur over a same number of samples, this number of samples being equal to the total number of radar system chirp signals. This zero-padding can enable homogeneous coordinate axis processing across all subsections of the radar cube. This zero-padding can lead to spectral energy widening and reduced processing gain in the Doppler-dimension of the radar cube, which may weaken any existing spectral peaks, which can, in turn, lead to peak detection losses. To mitigate this outcome, the threshold-based peak detection at each processing step of each subsection of the radar cube can be relaxed in order to detect weaker candidate peaks. In that case, the final pass-criteria executed across all candidate peaks can be selected to filter out identified candidate peaks that are actually noise but passed the relaxed peak-detection criteria during radar cube subsection processing.

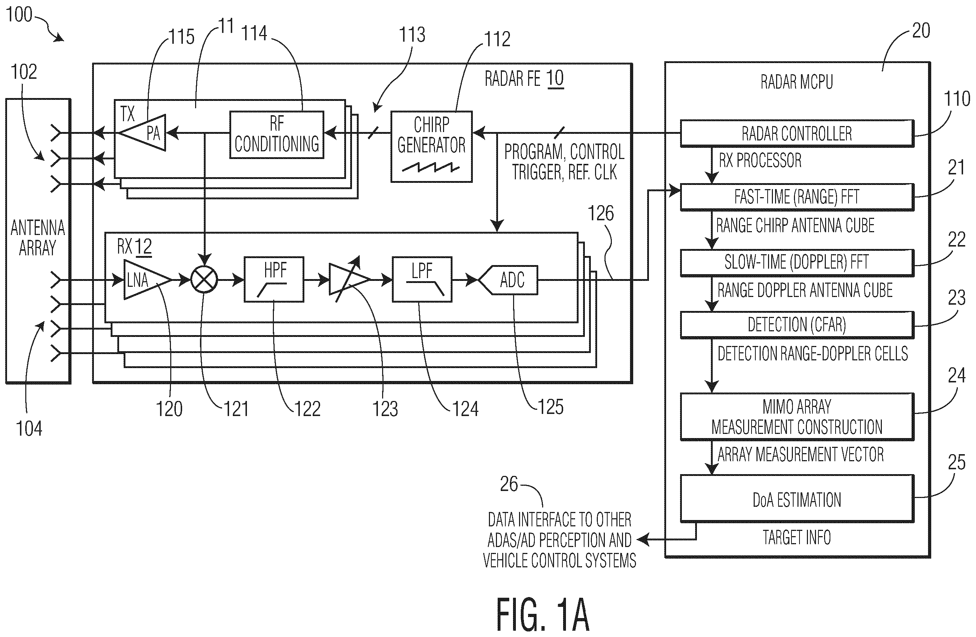

To illustrate the design and operation of a vehicle radar system, reference is now made to FIG. 1A which depicts a simplified schematic block diagram of an automotive radar system 100 that includes a radar device 10 connected to a radar controller processor 20. In selected embodiments, the radar device 10 may be embodied as a line-replaceable unit (LRU) or modular component that is designed to be replaced quickly at an operating location. Similarly, the radar controller processor 20 may be embodied as a line-replaceable unit (LRU) or modular component. Although a single or mono-static radar device 10 is shown, it will be appreciated that additional distributed radar devices may be used to form a distributed or multi-static radar. In addition, the depicted radar system 100 may be implemented in integrated circuit form with the device 10 and the radar controller processor 20 formed with separate integrated circuits (chips) or with a single chip, depending on the application.

Within radar system 100 each radar device 10 includes one or more transmitting antenna elements 102 and receiving antenna elements 104 connected, respectively, to one or more radio frequency (RF) transmitter (TX) units 11 and receiver (RX) units 12. For example, each radar device (e.g., 10) is shown as including individual antenna elements 102, 104 (e.g., TX1,i, RX1,j) connected, respectively, to three transmitter modules (e.g., 11) and four receiver modules (e.g., 12), but these numbers are not limiting and other numbers are also possible, such as four transmitter modules 11 and six receiver modules 12, or a single transmitter module 11 and/or a single receiver module 12.

Each radar device 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna 102 (TX1,i) and radiated.

The radar signal transmitted by the transmitter antenna elements 102 (TX1,i, TX2,i) may be reflected by an object, and part of the reflected radar signal reaches the receiver antenna elements 104 (RX1,i) at the radar device 10. At each receiver module 12, the received (radio frequency) antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first highpass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal 126 (D1). The receiver module compresses objects echo of various delays into multiple sinusoidal tones whose frequencies correspond to the round-trip delay of the echo.

The radar system 100 also includes a radar controller processing unit 20 that is connected to supply input control signals to the radar device 10 (e.g., via controller 110) and to receive therefrom digital output signals (e.g., digital signal 126) generated by the receiver modules 12.

In selected embodiments, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of FMCW radar) and/or register programming or state machine signals for RF (radio frequency) circuit enablement sequences. In addition, the radar controller processor 20 may be configured to program the transmitter modules 11 to operate in a time-division fashion by sequentially transmitting chirps for coordinated communication between the transmit antenna elements 102 TX1,i, RX1,j.

Radar controller processor 20 is configured to process digital signal 126 to ultimately identify a distance to objects as well as an angular position of those objects with respect to radar system 100. Digital signal 126 includes a sequence of digital values representing magnitudes of radar signals received by receiving antenna elements 104 captured over time. Typically, each digital value is associated with a particular chirp number and sample number.

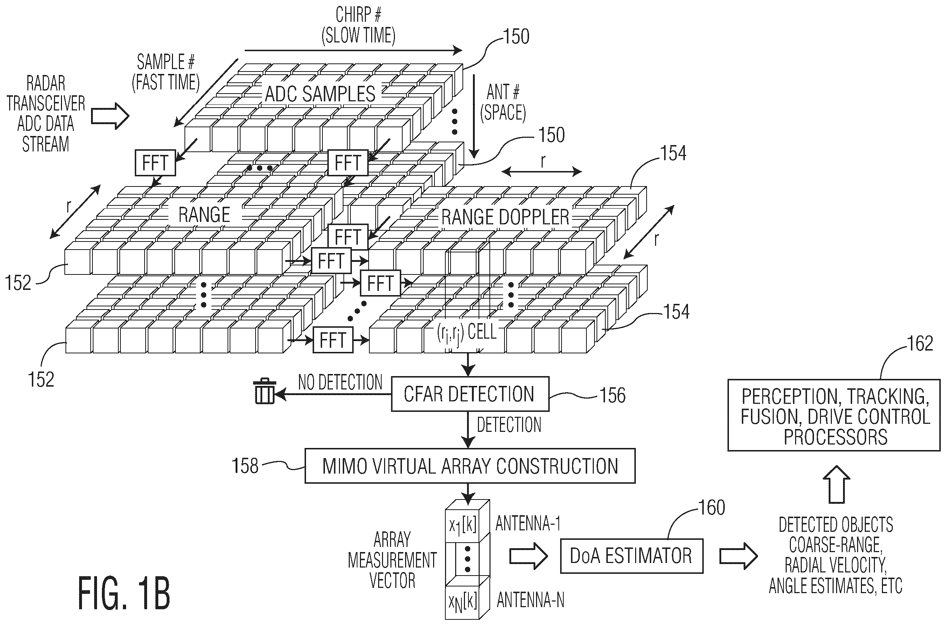

FIG. 1A shows the series of signal processing steps that are implemented by processor 20 in order to properly process digital signal 126 received from radar device 10 to identify potential nearby objects. To complement FIG. 1A, FIG. 1B graphically depicts, at a high-level, the processing steps that may be implemented by processor 20 to process digital signals 126.

The content of digital signals 126 is made up of a series of data frames that include a number of digital sample values (e.g., captured by ADCs 125 of receiver units 12) where the sample values are arranged in a two-dimensional matrix that is generated based upon a sequence of pulsed signals. The data structure making up a single captured frame is depicted by matrix 150 in FIG. 1B. As depicted, a single frames-worth of data in matrix 150 includes a two-dimensional matrix with a first dimension that is referred to as the "fast time" dimension and represents data values that were captured from the different pulsed signals. The second dimension of matrix 150 is referred to as the "slow time" dimension and represents data values that were captured in response to the different chirp signals that may be included within a particular pulsed signal that was transmitted by transmitter modules 11. As shown in FIG. 1B, signal processing may involve processing multiple frames of data represented by the several matrixes 150. In the present disclosure, that may involve processing individual frames of data, as described herein, to identify sets of peak values within the frames. Or, alternatively and as described herein, this may involve processing different subsections of the ADC data stream to identify sets of candidate peak values, which are ultimately combined across an entire radar cube to perform final peak detection. Typically, during such signal processing, frames of data represented by a matrix 150 are captured for each receive channel. As such, FIG. 1B depicts multiple matrixes 150 that are each associated with a different receive channel and may be received as input data to the signal processing chain.

For subsections of radar cube data that may comprise all or portions of one or more of data represented by matrix 150, radar controller processor 20 initially performs a fast-time range Fast Fourier transform (FFT) 21 (FIG. 1A) to generate new frame data represented by matrix 152. The FFT 21 is executed on the 1-D arrays of data (i.e., the signal) associated with each distinct chirp in the original input matrix 150 to generate a 1-D transformed signal of the same length. The FFTs of each chirp in the original input frame represented by matrix 150 are combined to generate the transformed frame as indicated by matrix 152. This process is repeated for each frame associated with each receive channel. The resulting data frames, which represent range maps, are represented in FIG. 1B as matrixes 152 and can be used to determine distance to particular objects as reflected in the range maps.

In a next step radar controller processor 20 performs an additional Fast Fourier Transform (FFT) 22 (FIG. 1A) (referred to as the slow-time or Doppler-FFT) on the range maps to generate a new range-Doppler frame data represented by matrixes 154. In this step, however, FFT 22 is applied along the opposite dimension from the FFT 21. As such, the FFT 22 is executed on the 1-D arrays of data (i.e., the signal) in matrixes 152 associated with each range bin in the matrix 152 to generate a transformed 1-D signal of the same length. The FFTs of each signal in the frames of matrixes 152 are combined to generate the range-Doppler data frames as indicated by matrixes 154. This process is repeated for each frame associated with each receive channel. The range-Doppler data frames associated with matrixes 154 provide information about the movement of a potential object over time from one sample number to the next. With the data frames associated with matrixes 154 generated, it is possible to process the data encoded therein to begin identifying potential objects and, in the case of a detected object, determine its velocity and direction of arrival.

Accordingly, the radar controller processor 20 performs constant false alarm rate (CFAR) object detection 23 (FIG. 1A), 156 (FIG. 1B).

If a potential object has been detected, radar controller processor 20 performs MIMO array measurement construction 24 (FIG. 1A), 158 (FIG. 1B) to determine the direction of arrival (DOA) for each object 25 (FIG. 1A), 160 (FIG. 1B). The final object information, which may include an object identifier, DOA, and other related information is then passed by radar controller processor 20 (in step 26, FIG. 1A, 162, FIG. 1B) to an ADAS or other system configured to utilize the object information to control one or more vehicle system.

In conventional radar systems, it is generally presumed that an entire radar cube dataset is available prior to processing. As discussed above, this approach requires access to significant memory resources to enable the processing of the entire radar cube dataset in memory at each step of the algorithm. To reduce those requirements, the present disclosure presents a radar system and method configured to implement steps in the radar signal processing process (e.g., the R-FFT, D-FFT and peak detection steps) in which each step is decomposed into N partial processing steps in which subsections of the entire radar cube are processed iteratively and, after a particular data subsection is processed, that data subsection can be discarded, reducing memory storage requirements. In the approach, peaks in the radar cube data are progressively detected as the various data subsections are processed.

Specifically, within a radar system, the radar cube data becomes available sequentially as the radar device 10 of the radar system's signal processing chain outputs the radar cube data responsive to processing the analog radar signals received by receive antenna elements 104 of radar device 10. In essence, the radar cube data is generated as a data stream flowing out of radar device 100 as digital signal 126 to radar controller processor 20. In a conventional approach, radar controller processor 20 stores the contents of the data stream in memory until the entire radar cube dataset has been received. Only then does radar controller processor 20 begin processing the radar cube data.

In the present system, however, radar controller processor 20 can be configured to process the radar cube data while it is being received and before a complete radar cube dataset has been received. In that configuration, radar controller processor 20 processes the streamed radar cube data in a series of N "chunks" or subsections such that when radar controller processor 20 receives a new subsection of the radar cube, a processing step is executed that encompasses the R-FFT, D-FFT, and peak detection steps on that subsection of the radar cube dataset. At that time, previously processed subsection of the same radar cube dataset can be discarded to free-up memory, having been previously processed.

This process is executed on each new subsection of the radar cube dataset as the subsections become available, such that each processing step of each subsection outputs a different set of detected candidate peaks associated with each radar cube dataset subsection. After subsections have been processed for the entire radar cube dataset (i.e., when the N subsections of the radar cube dataset have been processed), the information regarding candidate peaks identified in each subsection of the radar cube are combined into a candidate peak dataset.

When generating the candidate peak dataset, data associated with the candidate peaks identified in each subset are combined into a single dataset. Such data may include, for each candidate peak, its coordinates, and peak information related to a same coordinate pair. In an embodiment, the candidate peak dataset includes the positions of identified candidate peaks from different subsections, where the positions are expressed as two-dimensional coordinates defined in terms of an origin (1^{st} row, 1^{st} column) of a hypothetical Range-Doppler matrix (e.g., matrix 154 of FIG. 1B) with dimensions equal to the dimensions of a Range-Doppler matrix of the full radar cube. In this two-dimensional coordinate system, the range-dimension has a size equal the number of samples per chirp, a quantity any subsection fits in by construction. The Doppler-dimension has a size equal the number of chirps of the full radar cube. As described herein, to ensure that the coordinates associated with the candidate peaks identified in each subsection are equivalent, during subsection processing (and, specifically, D-FFT processing) the number of available chirps in each subsection can be by extended (e.g. by zero-padding) over the Doppler dimension so that the dimensions (e.g., the number of chirps per subsection) of the extended subsections being processed matches the dimensions of a full radar cube. This provide that the Range-Doppler spectrum for each subsection can be described using the same coordinate system. Also, the contribution of each subsection to the Range-Doppler spectrum of the (hypothetical) whole radar cube (which is never stored or computed) is also clearly defined. The candidate peak dataset can be generated using general candidate peak detection algorithms. However, in some embodiments, it may be possible to aggregate peaks at the spectral level before analyzing the dataset using DoA algorithms, in order to increase SNR and get closer to the SNR of the traditional processing. If such aggregation is performed, normalization may not be required, but some phase correction may be required for a phase term depending on the subsection. The phase correction may be required to coherently combine the candidate peaks obtained from different subsections and effect the SNR increase.

With the candidate peak data detected within the various subsections of the radar cube dataset combined, a final pass-criteria is applied to the candidate peak dataset to determine whether the individual candidate peaks contained therein represent true peaks that should be output to the DOA estimation subroutines of the radar system. The final pass-criteria may involve determining the number of times candidate peaks are found at the same location over the Range-Doppler spectrum of one or more subsections of the radar cube dataset. The location of a peak can be defined by the offset (in bins) of the peak from the origin (1^{st} row, 1^{st} column) of the Range-Doppler matrix for the subsection. The sizes of the Range-Doppler matrix of each subsection are the same, as described above, due to zero padding operations. If the number of times the candidate peaks are found at the same location across the Range-Doppler spectra of the various radar cube subsections exceeds a predefined threshold, it can be determined that the location is associated with a true peak for the purposes of object DOA estimation.

During radar cube subsection processing, because processing is being performed on only subsections of the radar cube, the 'slow-time' Doppler-FFT operation may utilize zero-padding to increase the size of the subsection dataset to ensure the resulting Doppler spectrum has the appropriate dimension. Zero-padding is utilized to provide that the radar cube subsections being processed include values (which could include real data values or zero-padded values) for all radar system chirp numbers. This enables the candidate peaks identified at locations within each radar cube subsection to be combined into a single dataset with a homogeneous coordinate axis that is consistent across all identified candidate peaks. As described herein, such zero-padding can lead to spectral energy widening and reduced processing gain in the Doppler-dimension, which may have the effect of weakening any existing spectral peaks within the data being processed, which in turn might lead to detection losses. As mitigation, it is contemplated that the threshold based peak detection executed when processing each radar cube subsection could be relaxed to detect and identify weaker candidate peaks at the subsection-processing stage. In that case, the final pass-criteria is responsible for detecting which of the weaker candidate peaks are most likely noise versus those that most likely reflect true peaks.

In a radar processing system, the range-FFT and Doppler FFT both operate so that their respective outputs concentrate a majority of signal energy around the input signal beat-frequency and Doppler coordinates in the range-Doppler two-dimensional dataset generated as the output of the two FFT operations. As such, the output of the range-FFT and Doppler FFT processing steps includes spectral peaks that can be detected by a corresponding peak detection operation. Once peak detection has been performed, the dataset that contains the peak detection information is generally significantly smaller than the original radar cube dataset (e.g., typically one tenth or one-hundredth the size). In essence, the detected peak dataset is a representation of the original radar cube that is very sparse along all dimensions.

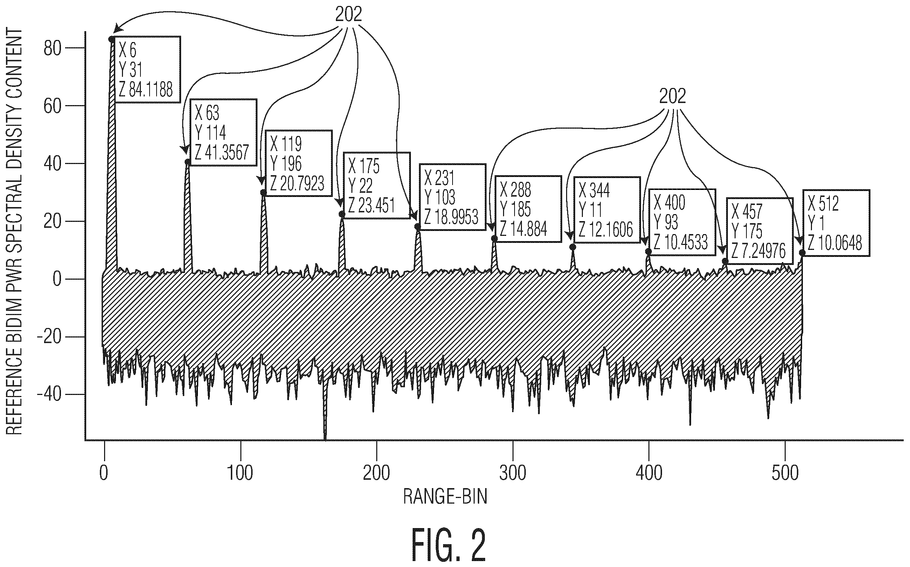

To illustrate, FIG. 2 is a graph depicting a representation of a slice of radar cube data after range-FFT and Doppler FFT processing. The horizontal axis represents the Doppler dimension while the vertical axis reference signal magnitude (power) for the data slice at corresponding Doppler bins (horizontal axis). As depicted, the result of the signal energy concentration caused by the range-FFT and Doppler FFT processing results in a number of energy peaks 202 concentrated at particular locations (referred to as Doppler bins) in the Doppler dimension. Each peak 202 is indicative of a signal reflection generated by an object in the vicinity of the radar system. The magnitude of each peak 202 is determined by the radar equation based on the object's range. In a peak detection dataset, only the information associated with the peaks 202 is retained, while other data can be discarded as noise. This can provide significant data size reductions as compared to the raw signal data.

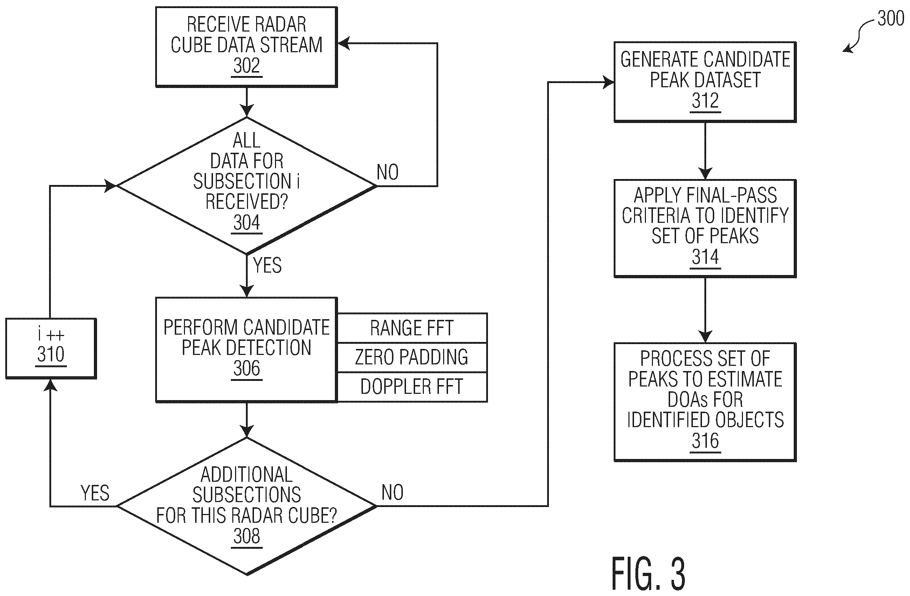

FIG. 3 is a flowchart depicting method 300 for processing subsections of a radar cube data iteratively in accordance with the present disclosure. Method 300 may be implemented by a signal processor of a radar system. In an embodiment, method 300 is implemented by radar controller processor 20 of radar system 100. Method 300 presumes the availability of a predetermined input value N that defines number of subsections of an input radar cube dataset to be processed. In various embodiments, N may be a relatively small number (e.g., 2 or 3). With N defined, at block 302 the processor initiates receipt of radar cube data in the form of a data stream from a radar signal processing system (e.g., radar device 10 of radar system 100).

While receiving the stream of radar cube data, at block 304 the processor determines whether the data for the current subsection 'i' of the radar cube dataset has been received (and stored in a memory accessible to the processor or controller). A subsection may include, for a particular radar system, a subset of J chirps x N-Antennas out of the total number of system chirps (i.e., n-Chirps x N-Antennas) in the system's "radar cube". If not, the method returns to block 302 in which the processor continues to receive the stream of radar cube data.

After, at block 304, all data for the current subsection 'i' has been received, method 300 moves on to block 306 in which peak detection is executed on the radar cube data contained within the current subsection 'i'. This step involves executing the range FFT and Doppler FFT over the data of the subsection 'i'. After executing the range FFT for all chirps available in subsection 'i', the 'slow-time' Doppler-FFT is executed over the Doppler dimension for all range bins resulting from range FFT processing. If subsection 'i' does not contain data values for all available chirps of the radar system, the columns of the matrix resulting from range FFT processing can be padded using zero values to make the columns full-size and contain values (some zeroed-out) for all chirp numbers of the radar system. The zero-padding for the i-th out of 1,...,N subsections is done by pre-appending (i-1) zero-tuples and appending (N-i) zero tuples, each tuple composed of (total number of chirps)/N zeros. Peak detection is typically performed iteratively over one or more adjacent columns of the Range Doppler spectrum matrix. Once peak detection is done for that small subset of columns of the matrix, the processed column data can be discarded.

Peak detection is then implemented over the resulting Range-Doppler matrix to identify a set of candidate peaks. In one embodiment, peak detection may be performed by a preliminary maximum search for accurately obtaining the peak location in the Range-Doppler matrix, followed by a variation of the CFAR algorithm (for instance OS-CFAR) .

After completion of block 306, peaks detected for the current subsection 'i' are stored as candidate peaks in memory (only requiring a relatively small amount of data storage) and the subsection 'i' input and intermediate data can be discarded, reducing the memory storage requirements of method 300. The data associated to a candidate peak would typically be the Range-Doppler spectral values at the peak and within a 3x3 vicinity of the peak, along with some metadata including the peak location.

At block 308 a determination is made as to whether there are additional subsections in the current radar cube dataset to be processed. If so, the process moves to block 310 in which the value of 'i' is incremented. The method then returns to block 304 to determine whether all data for that subsection has been received. If not, method 300 returns to block 302 to continue receiving the radar cube data stream until all data for the new subsection has been received.

If, however, there are no more subsections of the radar cube to be processed, indicating that sets of candidate peaks have been determined for all subsections of the current radar cube dataset, the method moves to block 312 in which the candidate peak data identified for each subsection are processed (e.g., by determining a number of times a candidate peak was identified at various locations within the dataset). Block 312 may involve, for example, combining information of candidate peaks with matching location into a form that supports the final-pass decision (at block 314, below). In one embodiment, the peak detection data associated with a location is an implicit binary decision (yes/no), and the aggregation process may be a simple counting of such decisions over all subsections for a given location. In other embodiment, the (complex valued) spectrum values of candidate peaks matching same location are considered, and the aggregation may consist on phase correcting and coherently combining these values over all subsections.

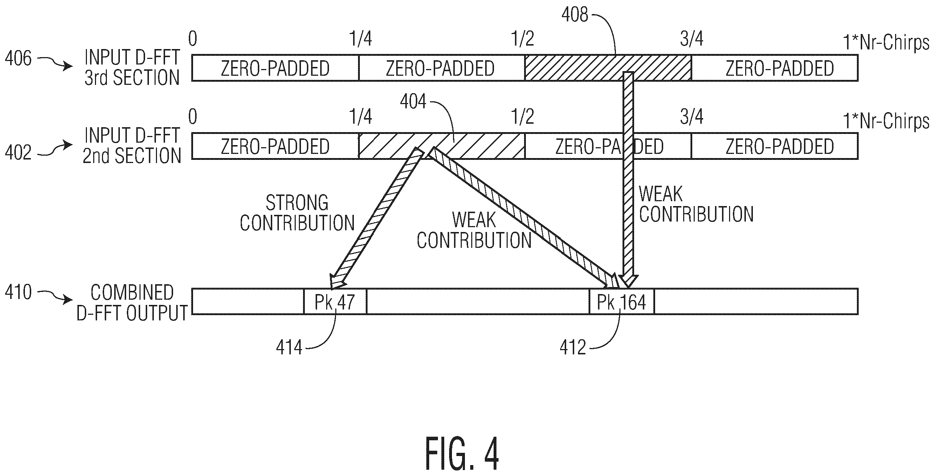

FIG. 4 is a diagram providing a visual illustration of an approach for generating a candidate peak dataset. In FIG. 4, a particular radar cube has been subdivided into four subsections (i.e., N = 4). Element 402 depicts the candidate peak processing of the second subsection 404 of the full radar cube. Element 406 depicts the candidate peak processing of the third subsection 408 of the full radar cube. The processing of the first and fourth subsections is not depicted.

As illustrated, the candidate peak detections in each subsection 404 and 408 (as well as the not-shown first and fourth subsections) are combined into candidate peak dataset 410 enabling a final-pass analysis to be formed on the combined dataset. In an embodiment, candidate peak dataset 410 identifies locations at which a number of candidate peaks were detected in the various subsections (e.g., subsections 404 and 408) of the radar cube. As depicted in FIG. 4, both subsections 404 and 408 include candidate peaks that are at the same location 412 in single candidate peak dataset 410. Given the final-pass criteria (as described herein), because that location is associated with candidate peaks appearing in two or more (or another threshold number), the final-pass criteria may determine that location 412 is associated with a true peak. Conversely, location 414 in single candidate peak dataset 410 is associated with a candidate peak present within only a single subsection - subsection 404. Because location 414 is only associated with a candidate peak in a single radar cube subsection, the final-pass criteria may determine that location 414 is associated with a false peak and can be discarded or ignored, as described herein.

Returning to FIG. 3, at block 314, a final pass-criteria is applied to the data in the candidate peak dataset to identify so-called 'real peaks'. In one embodiment, the final pass-criteria involves determining whether the number of times a particular candidate peak appears in the candidate peak dataset at the same location in the range-Doppler 2D grid exceeds a predetermined threshold. As such, at block 314, each location in the candidate peak dataset is analyzed to determine the number of candidate peaks that were detected at that location. If the threshold number is exceeded, that location can be reported as a true peak location. The set of true peak locations is reported at block 316 and can be utilized, as describe herein, to performed DOA estimation for objects in the vicinity of the radar system.

Accordingly, method 300 enables the iterative processing of the radar cube dataset by dividing it into the processing of subsections with reduced storage memory requirements. Because the candidate peak detection algorithm (i.e., the algorithm associated with block 306) is applied to each subsection of the radar cube, and, specifically, the Doppler-FFT is applied to only a subsection of the full radar cube -specifically, 1/N of total useful signal samples-, the processing gain of that Doppler-FFT can be only 1/N of that in the conventional approach in which all radar cube data is processed.

By processing subsections of a radar cube in this manner, there may be a widening of spectral energy around the candidate peaks in the range-Doppler spectrum for a subsection due to the shorter windowing applied. This widening in the Doppler dimension of useful spectral energy can pose several challenges as it may reduce the signal-to-noise ratio (SNR) for further signal processing. As a consequence, there may be some risk that if conventional peak detection approaches are utilized over the range-Doppler spectrum for a subsection, some true peaks may be discarded or not detected if those peaks have magnitudes falling below or near the peak detection algorithm's signal thresholds, which are generally defined as a signal over noise level. As such, this spectral energy widening can weaken peak detection in individual radar cube subsections, which may result in signal peaks that may otherwise have been detected if processing was performed on the full radar cube dataset not being detected.

To mitigate these difficulties, the present method provides for the use of a peak detection algorithm at block 306 of method 300 with relaxed thresholds to enable the identification of more peaks at the subsection processing stage to ensure that lower magnitude peaks, with magnitudes closer to the noise level in the subsection range-Doppler spectrum are included in the set of candidate peaks. In one embodiment, for example, this involves the use of a peak detection algorithm at the subsection stage such as ordered-statistic constant false alarm rate (OS-CFAR) configured with relaxed tolerances to detect weaker than normal peaks (described in more detail below). By configuring the peak detection algorithm to detect weaker peaks, the risk that lower magnitude peaks resulting from the reduced processing gain are not detected can be mitigated.

A consequence of the relaxed tolerances of the peak detection algorithm that may be implemented in conjunction with block 306 of method 300 is that some noise may be identified by the peak detection algorithm as candidate peaks. Those noise (or 'false') peaks, however, can be filtered out using the final pass-criteria described herein as a final processing step before DOA estimation.

As the number of subsections N used in processing the radar cube dataset goes up, the peak detection algorithms can be increasingly relaxed to detect more candidate peaks. As such, the degree of relaxation may depend on the number of sections 'N', because, as N increases the processing gain goes down and the weaker the candidate peaks are that potentially may add up to a true peak.

To illustrate the potential memory footprint reduction benefits of the present approach for radar cube dataset processing, a comparison of the present approach for subsection-based radar cube processing versus conventional approaches is now described. Both conventional and proposed approaches are first enhanced to increase its performance with following measures, well-known in the industry: 1) Windowing may lead to wide spectral peaks that can mislead a conventional OS-CFAR algorithm, as many points in and around the real peaks would qualify at OS-CFAR test condition, leaking into multiple false detections for a single and powerful peak. Additionally, and specifically for the case of the proposed approach, the peak detection is executed using 1/N of available chirps, which leads, in turn, to N-times wider spectral peaks in the Doppler-dimension. In order to avoid the problem of multiple false detections, a max filter is required, which filter outs any point within a decreasing or increasing slope (existing around strong spectral peaks) which is not a maximum. This can be achieved by compounding a 2D-max filter of size 4x4 bins with an OS-CFAR. The max filter is executed over the range-Doppler spectrum power data. The OS-CFAR check is evaluated on the output points yielded by the 2D-max filter.

The windowing applied to the subsection samples in 'fast-time' as well as 'slow-time' dimensions shape the energy distribution around peaks in the range-Doppler spectrum. Windows with a sharp, narrow spectrum main-lobe have also powerful sidelobes that strongly emerge over background noise when SNR is high. These sidelobes can pass the max-filter and qualify after the OS-CFAR algorithms used, which can lead to false peak detections for each of these sidelobes. On the contrary, a window with a relatively wide spectrum generally has low sidelobes which may not create this problem. When SNR is low, the problem is reversed: a window with wide spectrum would spread energy of a weak peak which would not be able to emerge above the noise. Therefore, a Chebyshev window (wide spectrum, -100dB ratio main lobe to side lobes) can be chosen for short range signal processing (range < 50% of maximum supported range) while a Sine window (narrow spectrum, -50dB ratio main lobe to side lobes) can be used for longer ranges. In the long range case, the window has high side lobes but since the window is applied in the low SNR region, these may lay below the background noise and may not interfere with the max-filter or OS-CFAR algorithms. With these measures taken, the reference processing flow can detect even the weakest peaks in testing.In comparing the present approach to conventional approaches, the same range-based windowing approach and the same peak detection method (composition of max-filter and OS-CFAR) are utilized. However, in accordance with the present approach, the OS-CFAR threshold is decreased in order to detect candidate peaks in the various radar cube subsections that may otherwise go unnoticed. When decreasing the OS-CFAR thresholds, the power threshold of the algorithm may be lowered compared to a nominal value. In a particular implementation of OS-CFAR a spectrum component has to exceed a certain threshold power difference over background noise in order to qualify as a detected peak. The threshold power difference is configured as a function of the background noise distribution, a desired target false detection ratio and structural parameters of the algorithm as e.g. the window size used. In the relaxed peak detection criteria, the threshold power difference is lowered with respect to the same threshold in a non-relaxed OS-CFAR. The relaxation ratio (ratio of the relaxed threshold to the nominal threshold) can be determined by simulation, with the goal of striking a balance of detection sensibility against an excess of noisy detections at the end of the whole processing (after final-pass criteria).

As discussed above, the relaxation of the peak detection algorithm can lead to noise peaks being incorrectly identified as candidate peaks during the processing of individual subsections. As such, the final pass-criteria applied to the combined candidate peak dataset is configured to detect those false peaks, enabling the false peaks to be removed from the final dataset.

Information contained in the full radar cube is also contained in (spread across) the N subsections, as described herein. When implementing the present method for subsection processing of radar cube data, each subsection of the radar cube, once processed, is discarded. Consequently, there is some risk that information could get lost. For example, a valid but weak peak may only appear after processing the third subsection of the radar cube data. In that case, the data associated with that same peak that would have been present in the first and second subsection may be inaccessible as those subsections may be discarded. In order to minimize the risk of lost peak data, the present disclosure contemplates that during the processing of method 300, additional data may be stored and later retrieved, if necessary. Specifically, during subsection processing information relating to 1) the per-subsection hard-decisions for a given peak: counter of "hits", and, 2) if a peak was detected at a particular location ('hit') in a previous subsection, the 3x3 neighborhood of data surrounding that peak, may be stored regardless of whether a peak has been detected at that position in the current subsection. Note that the 3x3 snapshots for the same position can be stored cumulatively (averaged, or weighted) in order to minimize storage needs.

In the present disclosure, the final-pass criteria operates as a counter that tracks the number of times candidate peaks occur at the same location in the full candidate peak dataset. Candidate peaks that result from noise and are not related to true peaks are unlikely to repeat at same coordinates across radar cube subsections. As such, if this counter approach detects that two or more peaks are present within the full candidate peak data at the same location, that location may be determined to contain true peak data. Because some true peaks do not fall exactly at a bin (i.e. at an integer coordinate pair of the range-Doppler spectrum matrix) , but the peak's energy is instead split across 2 bins, setting the counter threshold to 3 or 4 may be too restrictive. As such, in various embodiments, locations associated with two or more peaks are designated true peaks according to the final-pass criteria.

Results for a simulation of the present method for radar signal processing are now compared to the results generated by conventional processing. The simulation results are for 256 chirps x 512 samples per chirp and N=4. Final pass-criteria for this simulation sets the true peak detection threshold at 2. During radar cube subsection processing, a relaxed OS-CFAR peak detection algorithm is utilized with the relaxation parameter (ratio of the relaxed power threshold to the nominal power threshold) set to 0.33.

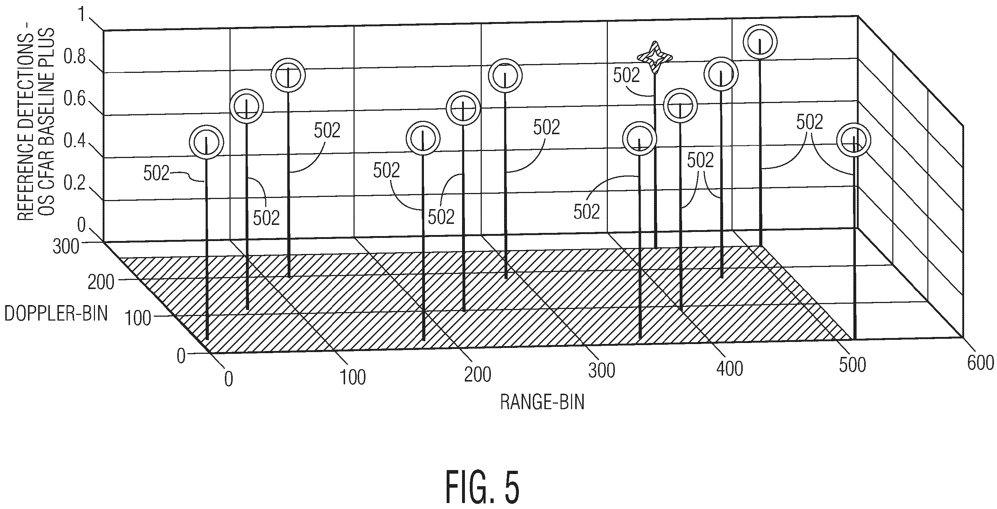

FIG. 5 is a three-dimensional plot depicting peaks detected by a conventional signal processing approach for the present simulation. In FIG. 5, the horizontal axis represents range-bin, the depth axis represents the Doppler-bin, and the vertical axis represents an indicator signal, taking value '1' at each location where a peak was found and taking value '0' elsewhere, thus the vertical lines 502 represent detected peaks. In this approach, all beat frequencies are detected (indicated by peaks 502 tipped with circles) in the radar cube data. This approach also does introduce some false alarm peaks (indicated by peaks 502 tipped by crosses).

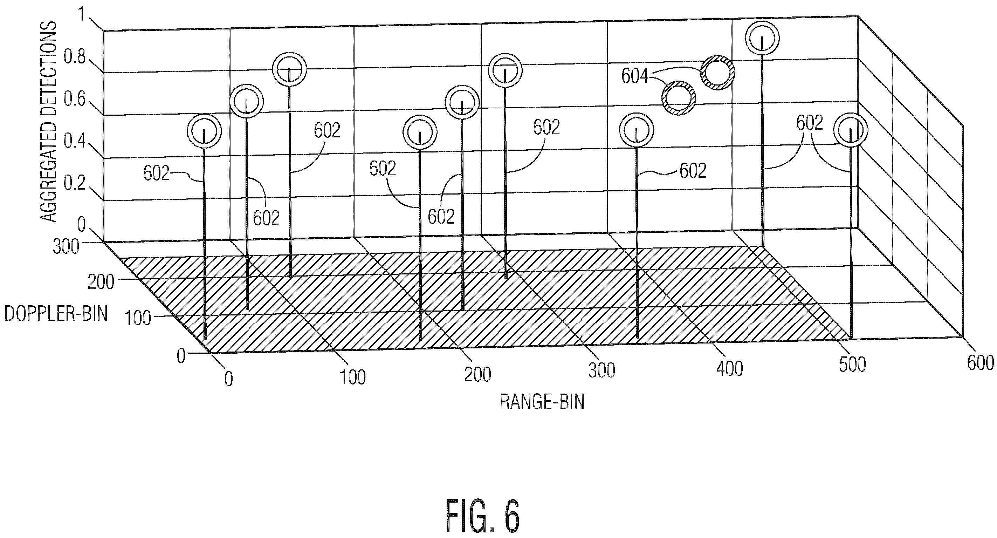

FIG. 6 is a three-dimensional plot depicting peaks detected by the present signal processing approach for the present simulation. In FIG. 6, the horizontal axis represents range-bin, the depth axis represents the Doppler-bin and the vertical axis represents an indicator signal, taking value '1' at each location where a final peak was found and taking value '0' elsewhere, thus the vertical lines 602 represent detected peaks. As depicted, the present approach for radar signal processing can detect most of the beat frequencies of the input radar cube data but misses some of the beat frequencies when SNR decreases below, in this example, 5 dB (missed peaks are indicated by circles 604 at their expected locations). Consequently, in this simulation, the present approach for signal processing introduces fewer false alarms than conventional processing. For nearby objects and high SNR conditions, both procedures therefore achieve the same detection probability (i.e., 100%).

In implementations of the present system, the radar signal processor (e.g., radar controller processor 20 of radar system 100) is coupled to a circular buffer configured to store the radar cube subsection data being processed (typically sized around 1/N of that of the full radar cube). In a specific embodiment, the circular buffer is sized to store the current radar cube subsection being processed, plus an extra buffer (around 1/8 the size of the full radar cube) to store further radar cube input data received via the data stream (e.g., at block 302 of FIG. 3) while the current subsection is being processed. The memory system accessed by the radar signal processor includes a small buffer (typically around 1/16 the size of the full radar cube) that is allocated for the storage of candidate and final peak data. In that case, each candidate or true peak is stored as a cell with the peak location along with its 3x3 neighborhood in the 2D grid. As such, in various embodiments, the total memory requirements for the present method for radar signal processing is about half that of the full radar cube size. As such, the present processing method provides adequate object detection while reducing memory storage requirements, which typically manifest as a reduced need for area-expensive SRAM.

Various examples of the present radar signal processing approach have been presented with respect to FMCW radar systems. However, it should be understood that the present approaches for radar cube subsection processing may be utilized in conjunction with other types of radar systems, such as those implementing orthogonal frequency division multiplexing (OFDM). In that case, a radar cube may include a three-dimensional dataset including K (a predetermined value) x radar channel transfer functions x N-Antennas. OFDM-based radar signal processing may be implemented in accordance with the present disclosure in the following manner. First, for transmitted radar signals, an (arbitrary) set of spectral components over an array of length N is defined. That array of length N is transformed into the time domain by applying an inverse-FFT. This is repeated K times to construct a matrix having K x N values. The values are then transmitted as transmitted radar signals by serializing, converting into analog the values defined by the K x N matrix, and upconverting the resulting analog signal to radio frequencies into the radio channel.

Then, on the receiver side, the reflections of those transmitted signals are received (e.g., through receive antennas). The received signals are then down-converted. After downconversion, the upcoming samples are packed into datasets formed as K arrays of length N, to generate a radar cube dataset having dimensions K x N times the number of receive antennas. Each array of length N in the radar cube is then reverted back to the spectral domain by applying an FFT operation and the radio channel transfer function is estimated for each array of length N. That is, because the sent spectral components are known, the system can estimate the transfer function by, essentially, dividing the received spectrum by the expected one. The obtained radio channel transfer function is then transformed into the time domain by an inverse-FFT (IFFT), with the result being the impulse response of the communication channel, which is equivalent to the radar delay profile (echoes). This result is analogous (and quantitatively very similar) to the output of range processing in FMCW radar after the range-FFT. By compiling the impulse responses of length N for the K arrays, forming a K x N matrix and executing another FFT over the remaining dimension, it is possible to obtain a range-Doppler spectrum of size KxN analogous to FMCW radar. Such a range-Doppler spectrum has the same peaks in the range-Doppler dimensions, and same or similar signal sparsity.

Accordingly, with reference to the present disclosure, in such an OFDM radar scheme, the value N would be equivalent to the FMCW-parameter 'chirp length' (range dimension) and the value K would be equivalent to the FMCW-parameter "number_of_chirps' (Doppler dimension). After all processing is done, the resulting radar cube spectrum is similar to an FMCW one. As such, in an OFDM scheme it is possible to apply the teachings of the present disclosure to iteratively process the OFDM radar cube, and later combine the intermediate results to get the final peaks.

In some aspects, the techniques described herein relate to an automotive radar system, including: at least one transmitter and at least one receiver, wherein the at least one transmitter and the at least one receiver are configured to transmit and receive radar signals, wherein the at least one transmitter and the at least one receiver are coupled to a vehicle; and a processor configured to: receive, from the at least one receiver, received radar signals, process the received radar signals to generate a first subsection of a radar cube, process the first subsection of the radar cube to detect a first set of candidate peaks, wherein candidate peaks in the first set of candidate peaks is associated with locations in a Range-Doppler matrix, process the received radar signals to generate a second subsection of the radar cube, process the second subsection of the radar cube to detect a second set of candidate peaks, wherein each candidate peak in the second set of candidate peaks is associated with a location in the Range-Doppler matrix, combine the locations of the first set of candidate peaks and the locations of the second set of candidate peaks into a candidate peak dataset, determine, using the candidate peak dataset, a set of locations in the candidate peak dataset, wherein each location in the set of locations is associated with candidate peaks in both the first set of candidate peaks and the second set of candidate peaks, and estimate a direction of arrival of an object using the candidate peaks associated with the set of locations.

In some aspects, the techniques described herein relate to an automotive radar system, wherein the processor is configured to, after processing the first subsection, delete the first subsection from a memory of the automotive radar system.

In some aspects, the techniques described herein relate to an automotive radar system, wherein the processor is configured to process the range-Doppler matrix from the first subsection to detect a first set of candidate peaks using a constant false alarm rate (CFAR) peak detection algorithm.

In some aspects, the techniques described herein relate to an automotive radar system, wherein the first subsection of the radar cube and the second subsection of the radar cube, taken together, contain a complete radar cube for the automotive radar system.

In some aspects, the techniques described herein relate to an automotive radar system, wherein the processor is configured to zero-pad the first subsection over a Doppler dimension before processing the first subsection to detect the first set of candidate peaks.

In some aspects, the techniques described herein relate to an automotive radar system, wherein the processor is configured to zero-pad the first subsection so that the first subsection includes values for all chirp signals encoded into the received radar signals.

In some aspects, the techniques described herein relate to an automotive radar system, wherein the automotive radar system is at least one of a frequency modulated continuous wave (FMCW) radar system and an orthogonal frequency division multiplexing (OFDM) radar system.

In some aspects, the techniques described herein relate to an automotive radar system, including: at least one transmitter and at least one receiver, wherein the at least one transmitter and the at least one receiver are configured to transmit and receive radar signals, wherein the at least one transmitter and the at least one receiver are coupled to a vehicle; and a processor configured to: receive, from the at least one receiver, received radar signals, generate a first subsection of a radar cube using the received radar signals, detect a first set of candidate peaks in the first subsection of the radar cube, generate a second subsection of the radar cube using the received radar signals, detect a second set of candidate peaks in the second subsection of the radar cube, determine a set of locations in a candidate peak dataset, wherein each location in the set of locations is associated with candidate peaks in both the first set of candidate peaks and the second set of candidate peaks, and estimate a direction of arrival of an object using the candidate peaks associated with the set of locations.

In some aspects, the techniques described herein relate to an automotive radar system, wherein the processor is configured to, after processing the first subsection, delete the first subsection from a memory of the automotive radar system.

In some aspects, the techniques described herein relate to an automotive radar system, wherein the processor is configured to detect the first set of candidate peaks using a constant false alarm rate (CFAR) peak detection algorithm.

In some aspects, the techniques described herein relate to an automotive radar system, wherein the first subsection of the radar cube and the second subsection of the radar cube, taken together, contain a complete radar cube for the automotive radar system.

In some aspects, the techniques described herein relate to an automotive radar system, wherein the processor is configured to zero-pad the first subsection of the radar cube over a Doppler dimension before processing the first subsection to detect the first set of candidate peaks.

In some aspects, the techniques described herein relate to an automotive radar system, wherein the processor is configured to zero-pad the first subsection so that the first subsection includes values for all chirp signals encoded into the received radar signals.

In some aspects, the techniques described herein relate to an automotive radar system, wherein the automotive radar system is at least one of a frequency modulated continuous wave (FMCW) radar system and an orthogonal frequency division multiplexing (OFDM) radar system.

In some aspects, the techniques described herein relate to a method, including: receiving, from at least one receiver, received radar signals, processing the received radar signals to generate a first subsection of a radar cube, processing the first subsection of the radar cube to detect a first set of candidate peaks, wherein candidate peaks in the first set of candidate peaks is associated with locations in a Range-Doppler matrix, processing the received radar signals to generate a second subsection of the radar cube, processing the second subsection of the radar cube to detect a second set of candidate peaks, wherein each candidate peak in the second set of candidate peaks is associated with a location in the Range-Doppler matrix, combining the locations of the first set of candidate peaks and the locations of the second set of candidate peaks into a candidate peak dataset, determining, using the candidate peak dataset, a set of locations in the candidate peak dataset, wherein each location in the set of locations is associated with candidate peaks in both the first set of candidate peaks and the second set of candidate peaks, and estimating a direction of arrival of an object using the candidate peaks associated with the set of locations.

In some aspects, the techniques described herein relate to a method, further including, after processing the first subsection, deleting the first subsection from a memory of an automotive radar system.

In some aspects, the techniques described herein relate to a method, further including processing the range-Doppler matrix from the first subsection to detect a first set of candidate peaks using a constant false alarm rate (CFAR) peak detection algorithm.

In some aspects, the techniques described herein relate to a method, wherein the first subsection of the radar cube and the second subsection of the radar cube, taken together, contain a complete radar cube for an automotive radar system.

In some aspects, the techniques described herein relate to a method, further including zero-padding the first subsection over a Doppler dimension before processing the first subsection to detect the first set of candidate peaks.

In some aspects, the techniques described herein relate to a method, further including zero-padding the first subsection so that the first subsection includes values for all chirp signals encoded into the received radar signals.

Although the examples have been described with reference to automotive radar systems, the systems and methods described herein may be implemented in conjunction with other types of radar systems. Devices or components described as being separate may be integrated in a single physical device. Also, the units and circuits may be suitably combined in one or more semiconductor devices. That is, the devices described herein may be implemented as a single integrated circuit, or as multiple integrated circuits.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents.

## Claims

1. An automotive radar system, comprising:
at least one transmitter and at least one receiver, wherein the at least one transmitter and the at least one receiver are configured to transmit and receive radar signals, wherein the at least one transmitter and the at least one receiver are coupled to a vehicle; and
a processor configured to:
receive, from the at least one receiver, received radar signals,
process the received radar signals to generate a first subsection of a radar cube,
process the first subsection of the radar cube to detect a first set of candidate peaks, wherein candidate peaks in the first set of candidate peaks is associated with locations in a Range-Doppler matrix,
process the received radar signals to generate a second subsection of the radar cube,
process the second subsection of the radar cube to detect a second set of candidate peaks, wherein each candidate peak in the second set of candidate peaks is associated with a location in the Range-Doppler matrix,
combine the locations of the first set of candidate peaks and the locations of the second set of candidate peaks into a candidate peak dataset,
determine, using the candidate peak dataset, a set of locations in the candidate peak dataset, wherein each location in the set of locations is associated with candidate peaks in both the first set of candidate peaks and the second set of candidate peaks, and
estimate a direction of arrival of an object using the candidate peaks associated with the set of locations.

2. The automotive radar system of claim 1, wherein the processor is configured to, after processing the first subsection, delete the first subsection from a memory of the automotive radar system.

3. The automotive radar system of claim 1 or 2, wherein the processor is configured to process the range-Doppler matrix from the first subsection to detect a first set of candidate peaks using a constant false alarm rate, CFAR, peak detection algorithm.

4. The automotive radar system of claim 3, wherein the first subsection of the radar cube and the second subsection of the radar cube, taken together, contain a complete radar cube for the automotive radar system.

5. The automotive radar system of any preceding claim, wherein the processor is configured to zero-pad the first subsection over a Doppler dimension before processing the first subsection to detect the first set of candidate peaks.

6. The automotive radar system of claim 5, wherein the processor is configured to zero-pad the first subsection so that the first subsection includes values for all chirp signals encoded into the received radar signals.

7. The automotive radar system of any preceding claim, wherein the automotive radar system is at least one of a frequency modulated continuous wave, FMCW, radar system and an orthogonal frequency division multiplexing, OFDM, radar system.

8. A method, comprising:
receiving, from at least one receiver, received radar signals,
processing the received radar signals to generate a first subsection of a radar cube,
processing the first subsection of the radar cube to detect a first set of candidate peaks, wherein candidate peaks in the first set of candidate peaks is associated with locations in a Range-Doppler matrix,
processing the received radar signals to generate a second subsection of the radar cube,
processing the second subsection of the radar cube to detect a second set of candidate peaks, wherein each candidate peak in the second set of candidate peaks is associated with a location in the Range-Doppler matrix,
combining the locations of the first set of candidate peaks and the locations of the second set of candidate peaks into a candidate peak dataset,
determining, using the candidate peak dataset, a set of locations in the candidate peak dataset, wherein each location in the set of locations is associated with candidate peaks in both the first set of candidate peaks and the second set of candidate peaks, and
estimating a direction of arrival of an object using the candidate peaks associated with the set of locations.

9. The method of claim 8, further comprising, after processing the first subsection, deleting the first subsection from a memory of an automotive radar system.

10. The method of claim 8 or 9, further comprising processing the range-Doppler matrix from the first subsection to detect a first set of candidate peaks using a constant false alarm rate, CFAR, peak detection algorithm.

11. The method of claim 10, wherein the first subsection of the radar cube and the second subsection of the radar cube, taken together, contain a complete radar cube for an automotive radar system.

12. The method of any of claims 8 to 11, further comprising zero-padding the first subsection over a Doppler dimension before processing the first subsection to detect the first set of candidate peaks.

13. The method of claim 12, further comprising zero-padding the first subsection so that the first subsection includes values for all chirp signals encoded into the received radar signals.
